# EUROPÄISCHE PATENTSCHRIFT

(11) **EP 1 000 829 B1**
(45) Veröffentlichungstag und Bekanntmachung des Hinweises auf die Patenterteilung: **31.08.2005**
(21) Anmeldenummer: 99120440.5
(22) Anmeldetag: 14.10.1999
(51) Int. Cl.: B60T 1/06, F16D 55/41

(54) **Antriebsachse**
Drive axle
Essieu moteur

(30) Priorität: 13.11.1998 DE 29820349 U
(43) Veröffentlichungstag der Anmeldung: 17.05.2000
(73) Patentinhaber: Röchling Getriebe KG, 49716 Meppen (DE)
(72) Erfinder: Suelmann, Anton, 49716 Meppen (DE); Pleus, Karlheinz, 4977 Oberlangen (DE); Koop, Herbert, 49733 Haren (Ems) (DE)
(74) Vertreter: Busse & Busse Patentanwälte

(56) Entgegenhaltungen:
- DE-A- 4 433 100
- DE-C- 4 010 742
- DE-C- 19 624 288

## Beschreibung

Die Erfindung betrifft eine Antriebsachse mit einem eingebauten Elektromotor, insbesondere Drehstrommotor, als Antriebsaggregat in einer Ausbildung gemäß dem Oberbegriff des Anspruchs 1. Antriebsachsen dieser Art finden überwiegend in Elektrofahrzeugen, beispielsweise Gabelstaplern, Anwendung.

Bei einem bekannten Fahrzeuggetriebe mit integrierter Lamellenbremse (DE 40 11 304 C1; DE 43 21 699 C1) ist zum Betätigen der Lamellenbremse ein außen am Mittelteil eines stirnseitigen Deckels schwenkbar abgestützter zweiarmiger Hebel vorgesehen, in dessen längeren Hebelarm ein Druckmittelantrieb untergebracht ist. Wird der Druckmittelantrieb mit Druck beaufschlagt, dann führt der Hebel eine Schwenkbewegung aus, wodurch der kurze Hebelarm auf einen axial verschieblich geführten Druckstift einwirkt, der seinerseits über eine Druckscheibe eine Druckplatte in derselben Richtung verschiebt. Dabei drückt die Druckplatte die Bremslamellen zusammen. Anstelle einer Betätigung des Bremshebels durch den Druckmittelantrieb kann dieser auch mittels eines an seinem längeren Hebelarm angreifenden Seilzuges betätigt werden, so daß das mit dem Fahrzeuggetriebe ausgerüstete Fahrzeug nach Abschalten des Elektromotors stillgesetzt werden kann. Zum Aufheben der Bremswirkung dienen bei Aufhebung der Bremskraft Schraubenfedern dazu, die Druckplatte und den Bremshebel in ihre Ausgangslage zurückzuführen.

Die Erfindung befaßt sich mit dem Problem, eine Antriebsachse der eingangs genannten Art zu schaffen, deren Lamellenbremsen mit geringem Antriebsaufwand präzise zu betätigen sind und leicht und einfach eingestellt und gewartet werden können.

Die Erfindung löst dieses Problem mit einer Antriebsachse mit den Merkmalen des Anspruchs 1. Hinsichtlich wesentlicher weiterer Ausgestaltungen wird auf die Ansprüche 2 bis 16 verwiesen.

Bei der Antriebsachse nach der Erfindung bildet der einarmige Bremshebel einen langen Hebelarm, der mit verhältnismäßig geringen Betätigungskräften verhältnismäßig große Bremsdruckkräfte erzeugen kann. Infolge des kugelkalottenförmigen Kontakteingriffs zwischen Druckstück und Bremshebel ist sichergestellt, daß das Druckstück durch die Einwirkung des Bremshebels keine Verkantungen erfährt, so daß die Bremslamellen infolge gleichförmiger Druckbeaufschlagung eine optimale Bremswirkung erzeugen. Infolge des Überstandes des betätigungseitigen Bremshebelendes über den Umfang des Achsgehäuseteils können sämtliche Mittel zur Einwirkung auf den Bremshebel außerhalb des Achsgehäuseteils angeordnet werden mit der Folge, daß nicht nur die Montage besonders leicht und einfach durchführbar ist, sondern auch Einstell- und Nachstellvorgänge sowie Wartungsarbeiten ausgeführt werden können, ohne die Antriebsachse zu öffnen bzw. zu zerlegen.

Weitere Einzelheiten und Wirkungen ergeben sich aus der nachfolgenden Beschreibung und der Zeichnung, in der mehrere Ausführungsbeispiele des Gegenstands der Erfindung näher veranschaulicht sind. In der Zeichnung zeigen:
- Fig. 1: einen beidseits axial abgebrochenen Querschnitt durch eine Antriebsachse nach der Erfindung mit einer ersten Ausführung eines Betätigungsmechanismus für den Bremshebel,
- Fig. 2: eine Schnittdarstellung ähnlich Fig. 1 zur Veranschaulichung einer abgewandelten Ausführung des Betätigungsmechanismus für den Bremshebel, und
- Fig. 3: eine beidseits abgebrochene, teilweise geschnittene Darstellung einer zwischen zwei diametral einander gegenüberliegenden Bremshebel-Betätigungsmechanismen angeordneten Betätigungsvorrichtung zur Freigabe der auf beiden Antriebsachsseiten angeordneten Lamellenbremsen für Bewegungsvorgänge, beispielsweise Abschleppvorgänge bei Störfällen mit abgeschaltetem Elektromotor und außer Betrieb befindlichem Hydrauliksystem.

Die in der Zeichnung dargestellte Antriebsachse umfaßt ein im wesentlichen rohrförmiges Achsgehäuse 1, das mit dem Stator 2 eines Elektromotors, insbesondere Drehstrommotors 3 verbunden ist. Der Rotor 4 des Drehstrommotors 3 ist mit einer den Rotor 4 axial durchgreifenden Hohlwelle 5 verbunden, die an ihrem in der Zeichnung linken Ende das Gehäuse 9 eines Differentialgetriebes 8 antreibt, das bei dem dargestellten Beispiel einstückig mit der Hohlwelle 5 ausgeführt ist. Die Abtriebswellen 10,11 des Differentialgetriebes treiben über jeweils zumindest ein Zwischenteil der Antriebsachse dieser auf beiden Seiten zugeordnete, nicht dargestellte Laufräder an.

Bei dem dargestellten Ausführungsbeispiel ist das Zwischenteil von einer Antriebswelle 15 gebildet, die zur zugehörigen Abtriebswelle 10 des Differentialgetriebes 8 radial versetzt ist und mit dieser über ein Stirnradgetriebe 16,17 in Antriebsverbindung steht.

Auf der Antriebswelle 15, die in einem mit dem Achsgehäuseteil 1 verbundenen Trägerteil 18 durch Lager 19 abgestützt ist, ist eine Lamellenbremse 20 angebracht. Eine erste Gruppe von Lamellen 21 stützt sich unverdrehbar, jedoch axial begrenzt verschieblich auf einem inneren Lamellenträger 22 ab, der verdrehfest auf der Antriebswelle 15 angebracht ist. Die zweite Gruppe von Lamellen 23 stützt sich an einem äußeren Lamellenträger 24 ab, der mit dem Flanschträger 18 fest verbunden ist. Die Lamellen 23 sind gegenüber ihrem Lamellenträger 24 ebenfalls unverdrehbar, jedoch axial begrenzt verschieblich abgestützt. Dabei liegt die in der Zeichnung rechts außen gelegene Lamelle der zweiten Gruppe von Lamellen 23 an der Außenseite des Flanschträgers 18 an. Auf die in der Zeichnung links außen befindliche Lamelle der zweiten Lamellengruppe 23 wirkt ein Druckstück 25 ein, das im wesentlichen kreisförmig ausgebildet ist, eine ringförmige Eingriffsfläche 26 für den Kontakt mit der benachbarten Lamelle 23 aufweist und über Führungsbolzen 27 in entsprechenden Axialbohrungen des äußeren Lamellenträgers 24 axial verschieblich geführt sowie zugleich unverdrehbar abgestützt ist.

Zur Betätigung der Lamellenbremse 20 ist ein einarmiger Bremshebel 30 vorgesehen, der um einen Achsbolzen 31 schwenkbar über ein Trägerstück 32 am Trägerteil 18 abgestützt ist, das Lamellenpaktet der Lamellenbremse 20 diametral übergreift und an seinem Betätigungsende 33 ein Stück über den Umfang des den Elektromotor 3 umgebenden Achsgehäuseteils 1 der Antriebsachse übersteht. Die Mittelachse des Achsbolzens 31, zu dessen Feineinstellung das Trägerstück 32 begrenzt in axialer Richtung verstell- und feststellbar ist, weist einen etwa dem Radius des Lamellenpaketes entsprechenden Abstand auf.

Bremshebel 30 und Druckstück 25 stehen jeweils an einer kugelkalottenförmigen Kontaktfläche 34,35 miteinander in Eingriff. Die Eingriffsfläche ist bei kugeligem Querschnitt zugleich ringförmig ausgeführt. Infolge dieses Kontakteingriffes wirken auf das Druckstück 25 praktisch nur axiale Stellkräfte ein, da aus der Schwenkbewegung des Bremshebels 30 resultierende, radial gerichtete Kräfte sich nicht auswirken und dementsprechend auch keine Verkantungen hervorrufen können. Bei dem großen Hebelarm, den der Bremshebel 30 darbietet, genügen vergleichsweise geringe Kräfte zur Erzeugung der jeweils benötigten Druckkräfte auf das Druckstück 25.

Die Lamellenbremse 20 und der Bremshebel 30 sind in einem gesonderten Bremsgehäuseabteil 36 des Achsgehäuses angeordnet, das auf der Seite des Differentialgetriebes 8 durch das Trägerteil 18 und auf Seiten des anzutreibenden Laufrades durch ein Gehäuseteil 37 begrenzt ist. Im Bereich des Betätigungsendes 33 des Bremshebels 30 weist das Bremsgehäuseabteil 36 einen Ansatzteil 38 auf, der auf seiner dem Achsgehäuseteil 1 zugewandten Seite mit einer axialen Zugangsöffnung 39 versehen ist. Die Mittelebene des Ansatzteils 38 des Bremsgehäuseabteils 36 ist unter einem Winkel zur vertikalen Mittelebene des Achsgehäuseteils 1 ausgerichtet, steht radial über den Umfang des Achsgehäuseteils 1 vor und ist bevorzugt unterhalb der horizontalen Scheitelebene des Achsgehäuseteils 1 gelegen. Bei einer derartigen Ausbildung baut die Antriebsachse in der Höhe außerordentlich klein. Außerdem können weitere Maschinenaggregate dicht am Achsgehäuse 1 montiert werden, da der Ansatzteil 38 einschließlich Druckmittelantrieb 40 bzw. 55 platzsparend im "toten Bereich" zwischen zwei benachbarten Aggregaten liegt. Grundsätzlich kann der Ansatzteil des Bremsgehäuseabteils 36 aber auch einen beliebigen Winkel zur vertikalen Mittelebene des Achsgehäuseteils 1 einnehmen und z.B. über dieses nach oben überstehen, wenn hinsichtlich der Bauhöhe und des Abstandes zu benachbarten Aggregaten keine besonderen Anforderungen zu erfüllen sind. Die Schwenkebene des Bremshebels 30 ist unter dem gleichen Winkel zur Mittelebene des Achsgehäuseteils 1 ausgerichtet wie die Mittelebene des Ansatzes 38 des Bremsgehäuseabteils 36.

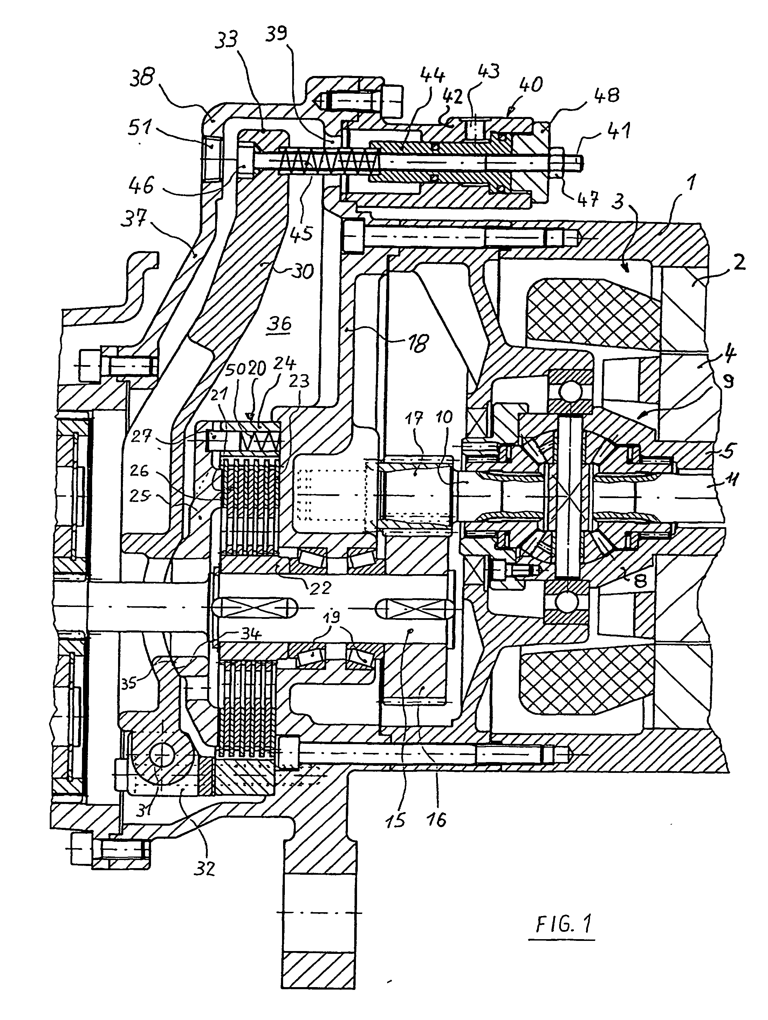

Der Bremshebel 30 ist bei der Ausführung nach Fig. 1 mittels eines Druckmittelantriebs 40 betätigbar, dessen Kolbenstange 41 am Betätigungsende 33 des Bremshebels 30 angreift und dessen Zylinder 42 am Ansatz 38 des Bremsgehäuseabteils 36 angeflanscht ist. Der Druckmittelzylinder 42 ist bei 43 an eine Druckmittelzuleitung angeschlossen, die beispielsweise zu einem Bremspedal (nicht dargestellt) des mit der Antriebsachse ausgerüsteten Fahrzeugs führt. Die Kolbenstange 41 durchgreift einen ringförmigen, im Druckmittelzylinder 42 verschieblich geführten Kolbenteil 44, der an seinem dem Bremshebel 30 zugewandten Ende eine Spiraldruckfeder 45 abstützt, die die Kolbenstange 41 umgreift und sich mit ihrem anderen Ende am Betätigungsende 33 des Bremshebels 30 abstützt. Diese Feder 41 stellt sicher, daß das Ende 33 des Bremshebels 30 an dem Kopf 46 der Kolbenstange 41 anliegt und dementsprechend eine klar definierte Grundstellung einnimmt.

Wird bei 43 Druckmittel unter Druck zugeführt, verschiebt sich der Kolbenteil 44 in Fig. 1 nach rechts und nimmt die Kolbenstange 41 mit, die sich an einem Stellglied 48 mit Innengewinde, das durch eine Kontermutter 47 gesichert ist, abstützt. Das Stellglied 48 kann nach Lösen der Kontermutter 47 entlang dem auf dem Endbereich der Kolbenstange 41 angebrachten Außengewinde verstellt und so die Grundstellung des Bremshebels 30 eingestellt werden. Der Bremshebel 30 nimmt in Fig. 1 diese Grundstellung ein, in der die Lamellenbremse 20 gerade noch nicht mit Bremskraft beaufschlagt wird und somit noch keine Bremskraft entfaltet. Tritt nach Betätigung der Lamellenbremse 20 ein Druckabfall im Zylinder 42 ein, so bewegt sich der Bremshebel 30 aus einer Bremsstellung in seine in Fig. 1 veranschaulichte Grundstellung zurück, woran jeweils auf einen Führungsbolzen 27 einwirkende Rückstellfedern 50 beteiligt sind.

An dem außenliegenden Ende der Kolbenstange 41 kann beispielsweise eine Betätigungsvorrichtung, z.B. ein Seilzug od.dgl. (nicht dargestellt) angreifen, mittels dem die Kolbenstange 41 unabhängig von dem Druckmittelantrieb 40 in Fig. 1 nach rechts verlagerbar ist, so daß über den Bremshebel 30 die Lamellenbremse 20 betätigt wird und beispielsweise als Feststellbremse wirkt.

Der Druckmittelantrieb 40 ist mittels seines Zylinders 42 am Ansatzteil 38 des Bremsgehäuseabteils 36 lösbar befestigt, so daß der Druckmittelantrieb 40 mühelos von außen angebaut und abgenommen werden kann. Um dies auch für die Kolbenstange 41 zu verwirklichen, ist im Ansatzteil 38 des Bremsgehäuseabteils 36 in axialer Verlängerung der Kolbenstange 41 eine Durchgangsöffnung 51 vorgesehen, durch die die Kolbenstange 41 in ihre Betriebsstellung eingeführt und zu Demontagezwecken herausbewegt werden kann.

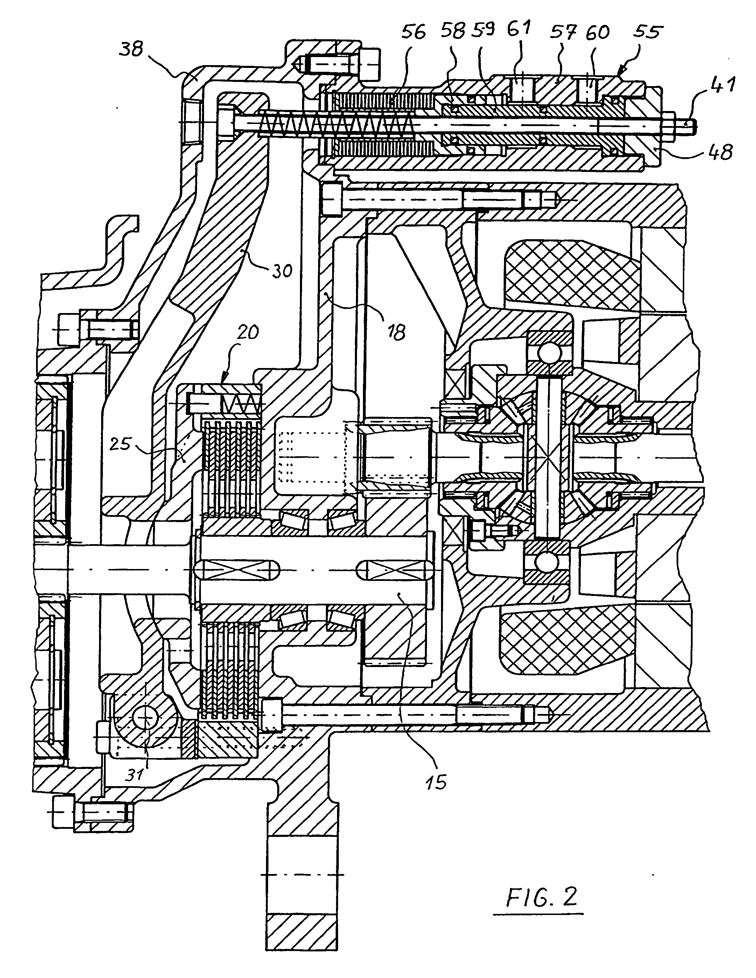

Bei der Ausführung nach Fig. 2, die sich lediglich hinsichtlich des Betätigungsmechanismus für den Bremshebel 30 von der Antriebsachsausführung nach Fig. 1 unterscheidet, umfaßt der Druckmittelantrieb 55 eine Feder 56, die bei dem dargestellten Beispiel von einem Tellerfederpaket gebildet ist, jedoch auch jede sonst geeignete Ausgestaltung haben kann. Diese Feder 56 übt über einen im Zylinder 57 des Druckmittelantriebs 55 verschieblichen Kolbenteil 58 und den ebenfalls im Zylinder 57 verschieblichen Kolbenteil 59 eine axial in Bremsrichtung, d.h. in Fig. 2 nach rechts hin, eine Kraft aus, durch die bei Ausschaltung (hydraulische Lüftung) des hydraulischen Betätigungssystems der Bremshebel 30 über die Kolbenstange 41 in eine Bremsstellung überführt wird, in der die Lamellenbremse 20 als Feststellbremse (Feder-speicherbremse) wirkt.

Der Zylinder 57 des Druckmittelantriebs 55 weist hydraulische Anschlüsse 60,61 auf. Diese sind unterschiedlich groß, um Verwechslungen der Anschlußleitungen der Bremssysteme im Service- und Reparaturfall auszuschließen. Über den hydraulischen Anschluß 61 wird bei Druckmittelbeaufschlagung der Kolbenteil 58 entgegen der Wirkung der Feder 56 in Fig. 2 nach links verschoben und dadurch die Wirkung der Feder 56 aufgehoben. Der Anschluß 60 entspricht dem Anschluß 43 der Ausführung nach Fig. 1 und dient dazu, bei Beaufschlagung z.B. über ein Bremspedal die Lamellenbremse 20 mittels des Bremshebels 30 zu betätigen, z.B. als Betriebsbremse einzusetzen.

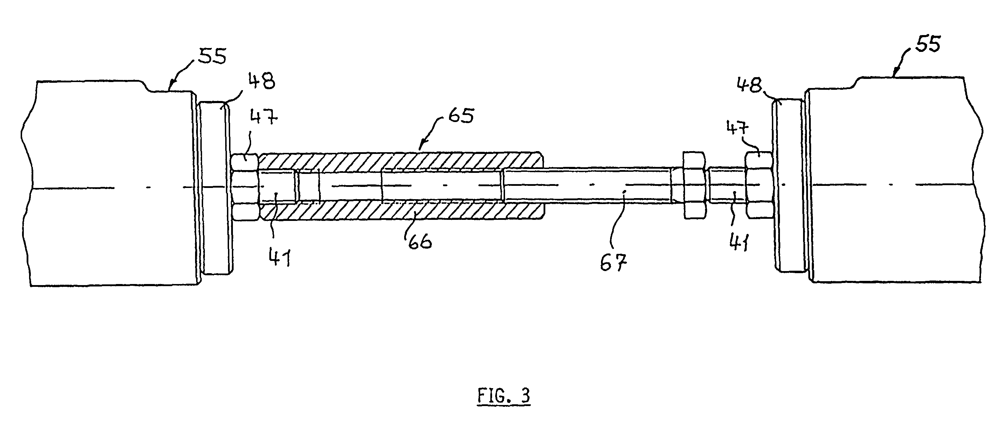

In Störfällen, in denen der Elektromotor 3 betriebsunfähig bzw. abgeschaltet ist und auch das Hydrauliksystem zur Lüftung des Tellerfederpakets 56 für die Betätigung der Lamellenbremse 20 als Feststellbremse ausgefallen ist, kann es wünschenswert sein, das mit der Antriebsachse nach der Erfindung ausgestattete Fahrzeug bewegen, z.B. abschleppen zu können. Während dies bei einer Ausführung der Antriebsachse gemäß Fig. 1 keiner besonderen Vorkehrungen bedarf, weil der Bremshebel 30 für die Lamellenbremse 20 bei Druckabfall in seine Grundstellung zurückkehrt, in der keine Bremswirkung entfaltet wird, wird bei der Achsausführung nach Fig. 2 durch die Feder 56 die Lamellenbremse 20 betätigt und das Fahrzeug festgestellt. Da bei Ausfall des Hydrauliksystems keine Druckmittelzufuhr bei 61 zum Zylinder 57 und damit keine Aufhebung der Druckwirkung der Feder 56 möglich ist, ist gemäß Fig. 3 eine Betätigungsvorrichtung 65 schematisch angedeutet, die zur Freigabe der Lamellenbremse 20 auf die Kolbenstange 41 des Druckmittelantriebs 55 einwirkt. Bei dem Ausführungsbeispiel in Fig. 3 mit auf beiden Antriebseiten der Antriebsachse vorgesehenen Lamellenbremsen 20 und mit Druckmittelantrieben 55 mit axial fluchtend einander gegenüberliegenden und einander zugewandten Kolbenstangen 41 wirkt die Betätigungsvorrichtung 65 auf beide Kolbenstangen 41 beider Druckmittelantriebe 55 in Freigaberichtung ein.

Die Betätigungsvorrichtung 65 kann jede geeignete Ausführung haben, beispielsweise von einem Exzenter gebildet sein, der zwischen die Enden der Kolbenstange 41 zwischengreift und bei seinem Verschwenken die Kolbenstangen 41 gegenläufig auseinanderdrückt. Bei dem dargestellten Beispiel ist die Betätigungsvorrichtung 65 als eine Art Spannschloß ausgebildet, dessen Spannhülse 66 auf das mit Außengewinde am Ende der linken Kolbenstange 41 aufgeschraubt ist und einen ein- und ausschraubbaren Spannbolzen 67 umfaßt, durch den die Kolbenstangen 47 gegen den Druck der auf sie einwirkenden Federn 56 auseinander- und in die dargestellte Freigabestellung bewegt werden können.

Die Antriebsachse ist auf jeder Achsseite mit einer Lamellenbremse 20, Bremshebel 30 und Betätigungsmechanismus 40 bzw. 55 versehen, so daß es sich anbietet, für die Überführung der Druckmittelantriebe 55 in Freigabestellung im Störfall eine gemeinsame Betätigungsvorrichtung 65 zwischen den Enden der Kolbenstangen 41 vorzusehen. Grundsätzlich kann jedoch jeder Lamellenbremse 20 auch eine gesonderte Betätigungsvorrichtung zugeordnet sein, die auf das jeweilige Ende der Kolbenstange 41 einwirkt, wobei als Betätigungsvorrichtung wiederum jede Ausführung Anwendung finden kann, die eine sichere Betätigung von Hand erlaubt.

## Patentansprüche

1. Antriebsachse mit einem eingebauten Elektromotor (3), insbesondere Drehstrommotor, als Antriebsaggregat, dessen Stator (2) mit einem die Antriebsachse kapselnden Achsgehäuse (1) und dessen Rotor (4) mit einer den Rotor (4) axial durchgreifenden Hohlwelle (5) verbunden ist, mit einem Differentialgetriebe (8), dessen Gehäuse (9) von der Hohlwelle (5) angetrieben ist und dessen Abtriebswellen (10,11) über zumindest jeweils ein Zwischenteil (15) ein der Antriebsachse auf jeder Seite zugeordnetes Laufrad antreiben, und mit einer jedem Zwischenteil (15) zugeordneten Lamellenbremse (20), die mittels eines über einen Bremshebel (30) verschiebbaren Druckstücks (25) betätigbar ist, **dadurch gekennzeichnet, daß** der Bremshebel (30) einarmig ausgebildet ist, das Lamellenpaket der Lamellenbremse (20) diametral übergreift, an seinem Betätigungsende (33) über den Umfang des den Elektromotor (3) umgebenden Achsgehäuseteils (1) übersteht und mit dem Druckstück (25) an einer kugelkalottenförmigen Kontaktfläche (34,35) in Eingriff steht.

2. Antriebsachse nach Anspruch 1, **dadurch gekennzeichnet, daß** das Lamellenpaket der Lamellenbremse (20) und der Bremshebel (30) jeweils in einem gesonderten Bremsgehäuseabteil (36) des Achsgehäuses (1) angeordnet sind.

3. Antriebsachse nach Anspruch 2, **dadurch gekennzeichnet, daß** das Bremsgehäuseabteil (36) einen das Betätigungsende des Bremshebels aufnehmenden Ansatzteil mit einer axialen Zugangsöffnung aufweist.

4. Antriebsachse nach Anspruch 2 oder 3, **dadurch gekennzeichnet, daß** die Mittelebene des Ansatzteils (38) des Bremsgehäuseabteils (36) unter einem Winkel zur vertikalen Mittelebene der Antriebsachse ausgerichtet ist und radial über den Umfang des den Elektromotor (3) umgebenden Achsgehäuseteils (1) vorsteht.

5. Antriebsachse nach Anspruch 4, **dadurch gekennzeichnet, daß** der Ansatzteil (38) zumindest im wesentlichen unterhalb der horizontalen Scheitelebene des Achsgehäuseteils (1) gelegen ist.

6. Antriebsachse nach einem der Ansprüche 3 bis 5, **dadurch gekennzeichnet, daß** die Zugangsöffnung des Ansatzteils (38) des Bremsgehäuseabteils (36) dem den Elektromotor (3) umgebenden Achsgehäuseteil (1) zugewandt ist.

7. Antriebsachse nach einem der Ansprüche 1 bis 6, **dadurch gekennzeichnet, daß** die Schwenkebene des Bremshebels unter dem gleichen Winkel zur Mittelebene der Antriebsachse ausgerichtet ist wie die Mittelebene des Ansatzes (38) des Bremsgehäuseabteils (36).

8. Antriebsachse nach einem der Ansprüche 1 bis 7, **dadurch gekennzeichnet, daß** der Bremshebel (30) an seinem inneren Ende um einen im Bremsgehäuseabteil festgelegten Achsbolzen (31) schwenkbar ist, dessen Mittelachse zur Achse des Lamellenpaketes der Lamellenbremse (20) einen etwa dem Radius des Lamellenpaketes entsprechenden Abstand aufweist.

9. Antriebsachse nach Anspruch 8, **dadurch gekennzeichnet, daß** der Achsbolzen (31) für den Bremshebel (30) in Richtung der Achse des Lamellenpaketes der Lamellenbremse (20) verstellbar abgestützt ist.

10. Antriebsachse nach einem der Ansprüche 3 bis 9, **dadurch gekennzeichnet, daß** der Bremshebel (30) mittels eines Druckmittelantriebs (40;55) betätigbar ist, dessen Kolbenstange (41) am Betätigungsende (33) des Bremshebels (30) angreift und dessen Zylinder (42) am Ansatz (38) des Bremsgehäuseabteils angeflanscht ist.

11. Antriebsachse nach Anspruch 10, **dadurch gekennzeichnet, daß** der Druckmittelantrieb (55) eine Feder umfaßt, welche bei einem Druckabbau in dem über den Druckmittelanschluß (61) zugeführten Druckmittel die Bremsbetätigung des Bremshebels (30) übernimmt.

12. Antriebsachse nach einem der Ansprüche 10 oder 11, **dadurch gekennzeichnet, daß** die Kolbenstange (41) relativ zum Kolbenteil (44;59) des Druckmittelantriebs (40;55) durch eine Stelleinrichtung (47,48) axial einstellbar ist.

13. Antriebsachse nach einem der Ansprüche 10 bis 12, **dadurch gekennzeichnet, daß** der Druckmittelantrieb (40;55) am Ansatzteil (38) des Bremsgehäuseabteils (36) lösbar befestigt und im Ansatzteil (38) des Bremsgehäuseabteils (36) in axialer Verlängerung der Kolbenstange (41) eine Durchgangsöffnung (51) für diese vorgesehen ist.

14. Antriebsachse nach einem der Ansprüche 10 bis 13, **dadurch gekennzeichnet, daß** zur Verwendung der Lamellenbremse (20) als Feststellbremse die Kolbenstange (41) des Druckmittelantriebs (40) durch direkte Betätigung mittels einer Betätigungsvorrichtung in Bremsrichtung verlagerbar ist.

15. Antriebsachse nach einem der Ansprüche 9 bis 14, **dadurch gekennzeichnet, daß** zur Freigabe der Lamellenbremse für Abschlepp- oder dgl. Bewegungsvorgänge eine auf die Kolbenstange des Druckmittelantriebs oder bei auf beiden Antriebsachsseiten vorgesehenen Lamellenbremsen mit axial fluchtend gegenüberliegenden Kolbenstangen, auf beide Kolbenstangen beide Druckmittelantriebe in Freigaberichtung einwirkende Betätigungsvorrichtung vorgesehen ist.

16. Antriebsachse nach einem der Ansprüche 1 bis 15, **dadurch gekennzeichnet, daß** das Lamellenpaket der Lamellenbremse (20) auf einer Antriebswelle (15) als Zwischenteil angeordnet ist, die zur zugehörigen Abtriebswelle (10) des Differentialgetriebes (8) radial versetzt ist und mit dieser über ein Stirnradgetriebe (16,17) in Antriebsverbindung steht.

## Claims

1. Drive axle having, as a drive unit, a built-in electric motor (3), and in particular a three-phase motor, whose stator (2) is connected to an axle housing (1) which encapsulates the drive axle, and whose rotor (4) is connected to a hollow shaft (5) which passes through the rotor (4) axially, having a differential gearbox (8) whose housing (9) is driven by the hollow shaft (5) and whose output shafts (10, 11) drive, via at least one intermediate member (15) in each case, respective running-gear wheels which are associated on respective sides with the drive axle, and having a multi-plate brake (20) associated with each intermediate member (15), which multi-plate brake (20) can be operated by means of a thrust piece (25) able to be moved by means of a brake lever (30), **characterised in that** the brake lever (30) is of the single-arm type, fits across the plate assembly of the multi-plate brake (20) diametrically, projects at its actuated end (33) beyond the circumference of the axle-housing part (1) which surrounds the electric motor (3), and engages with the thrust piece (25) at a contact surface (34, 35) in the form of a segment of a sphere.

2. Drive axle according to claim 1, **characterised in that** the plate assembly of the multi-plate brake (20) and the brake lever (30) are each arranged in a separate brake-housing compartment (36) of the axle housing (1).

3. Drive axle according to claim 2, **characterised in that** the brake-housing compartment (36) has an extension piece which receives the actuated end of the brake lever and which has an axial access opening.

4. Drive axle according to claim 2 or 3, **characterised in that** the centre plane of the extension piece (38) of the brake-housing compartment (36) is oriented at an angle to the vertical centre plane of the drive axle and projects radially beyond the circumference of the axle-housing part (1) surrounding the electric motor (3).

5. Drive axle according to claim 4, **characterised in that****,** at least in the main, the extension piece (38) is situated below the horizontal plane tangent to the crest of the axle-housing part (1).

6. Drive axle according to one of claims 3 to 5, **characterised in that** the access opening of the extension piece (38) of the brake-housing compartment (36) faces towards the axle-housing part (1) surrounding the electric motor (3).

7. Drive axle according to one of claims 1 to 6, **characterised in that** the plane of pivot of the brake lever is oriented at the same angle to the centre plane of the drive axle as the centre plane of the extension (38) of the brake-housing compartment (36) is.

8. Drive axle according to one of claims 1 to 7, **characterised in that** the brake lever (30) is pivotable at its inner end about a pivot pin (31) which is fixed in the brake-housing compartment and whose centre axis is at a distance from the axis of the plate assembly of the multi-plate brake (20) which approximately corresponds to the radius of the plate assembly.

9. Drive axle according to claim 8, **characterised in that** the pivot pin (31) for the brake lever (30) is supported in such a way as to be adjustable in the direction of the axis of the plate assembly of the multi-plate brake (20).

10. Drive axle according to one of claims 3 to 9, **characterised in that** the brake lever (30) can be actuated by means of a drive (40, 55) using pressurised medium, the piston rod (41) of which drive (40, 55) engages with the actuated end (33) of the brake lever (30) and the cylinder (42) of which drive (40, 55) is flange-mounted on the extension (38) of the brake-housing compartment.

11. Drive axle according to claim 10, **characterised in that** the drive (55) using pressurised medium comprises a spring which, if there is a decline in pressure in the pressurised medium fed to the connection (61) for pressurised medium, becomes responsible for actuating the brake lever (30).

12. Drive axle according to either of claims 10 and 11, **characterised in that** the piston rod (41) can be set axially relative to the piston member (44, 59) of the drive (40, 55) using pressurised medium by means of a setting means (47, 48).

13. Drive axle according to one of claims 10 to 12, **characterised in that** the drive (40, 55) using pressurised medium is detachably fastened to the extension piece (38) of the brake-housing compartment (36) and there is provided in the extension piece (38) of the brake-housing compartment (36), on an axial extension of the piston rod (41), an opening (51) for the latter to pass through.

14. Drive axle according to one of claims 10 to 13, **characterised in that****,** to allow the multi-plate brake (20) to be used as a parking brake, the piston rod (41) of the drive (40) using pressurised medium can be displaced in the braking direction by direct actuation by means of an actuating device.

15. Drive axle according to one of claims 9 to 14, **characterised in that****,** to release the multi-plate brake for towing or the like movement operations, there is provided an actuating device which acts in the releasing direction on the piston rod of the drive using pressurised medium or, where multi-plate brakes having piston-rods situated opposite one another in axial alignment are provided on both sides of the drive axle, which acts in the releasing direction on both the piston rods of both the drives using pressurised medium.

16. Drive axle according to one of claims 1 to 15, **characterised in that** the plate assembly of the multi-plate brake (20) is arranged on a drive shaft (15) acting as an intermediate member, which drive shaft (15) is offset radially relative to the associated output shaft (10) of the differential gearbox (8) and is in driving connection with the said shaft (10) via spur gearing (16, 17).

## Revendications

1. Essieu moteur, avec un moteur électrique (3) incorporé, notamment un moteur triphasé, comme organe d'entraînement dont le stator (2) est relié à un boîtier d'essieu (1) enfermant l'essieu moteur et dont le rotor (4) est relié à un arbre creux (5) traversant axialement le rotor (4), avec un différentiel (8) dont le boîtier (9) est entraîné par l'arbre creux (5) et dont les arbres de sortie (10, 11) entraînent via au moins un élément intermédiaire respectif (15) une roue associée de chaque côté à l'essieu moteur, et avec un frein (20) à disques multiples qui est associé à chaque élément intermédiaire (15) et qui peut être actionné au moyen d'un élément de pression (25) pouvant être déplacé en translation par un levier de frein (30), **caractérisé en ce que** le levier de frein (30) est réalisé monobras, recouvre diamétralement le groupe de disques du frein (20) à disques multiples, dépasse par son extrémité d'actionnement (33) de la périphérie de la partie de boîtier d'essieu (1) entourant le moteur électrique (3), et est en prise avec l'élément de pression (25) par une surface de contact (34, 35) en forme de calotte sphérique.

2. Essieu moteur selon la revendication 1, **caractérisé en ce que** le groupe de disques du frein (20) à disques multiples et le levier de frein (30) sont respectivement disposés dans un compartiment (36) séparé de boîtier de frein du boîtier d'essieu (1).

3. Essieu moteur selon la revendication 2, **caractérisé en ce que** le compartiment (36) de boîtier de frein présente une partie d'appendice dotée d'une ouverture d'accès axiale, recevant l'extrémité d'actionnement du levier de frein.

4. Essieu moteur selon la revendication 2 ou 3, **caractérisé en ce que** le plan médian de la partie d'appendice (38) du compartiment (36) de boîtier de frein est orienté sous un angle par rapport au plan médian vertical de l'essieu moteur et dépasse radialement de la périphérie de la partie de boîtier d'essieu (1) entourant le moteur électrique (3).

5. Essieu moteur selon la revendication 4, **caractérisé en ce que** la partie d'appendice (38) est située au moins pour l'essentiel en dessous du plan horizontal passant par le sommet de la partie de boîtier d'essieu (1).

6. Essieu moteur selon l'une quelconque des revendications 3 à 5, **caractérisé en ce que** l'ouverture d'accès de la partie d'appendice (38) du compartiment (36) de boîtier de frein est tournée vers la partie de boîtier d'essieu (1) entourant le moteur électrique (3).

7. Essieu moteur selon l'une quelconque des revendications 1 à 6, **caractérisé en ce que** le plan de pivotement du levier de frein est orienté sous le même angle, par rapport au plan médian de l'essieu moteur, que le plan médian de la partie d'appendice (38) du compartiment (36) de boîtier de frein.

8. Essieu moteur selon l'une quelconque des revendications 1 à 7, **caractérisé en ce que** le levier de frein (30) peut pivoter, à son extrémité intérieure, autour d'un axe boulonné (31) qui est fixé dans le compartiment de boîtier de frein et dont l'axe médian présente, par rapport à l'axe du groupe de disques du frein (20) à disques multiples, une distance correspondant approximativement au rayon du groupe de disques.

9. Essieu moteur selon la revendication 8, **caractérisé en ce que** l'axe boulonné (31) pour le levier de frein (30) est soutenu à déplacement en direction de l'axe du groupe de disques du frein (20) à disques multiples.

10. Essieu moteur selon l'une quelconque des revendications 3 à 9, **caractérisé en ce que** le levier de frein (30) peut être actionné au moyen d'un entraînement (40 ; 55) par fluide sous pression, dont la tige de piston (41) agit sur l'extrémité d'actionnement (33) du levier de frein (30) et dont le cylindre (42) est flasqué sur l'appendice (38) du compartiment de boîtier de frein.

11. Essieu moteur selon la revendication 10, **caractérisé en ce que** l'entraînement (55) par fluide sous pression comprend un ressort qui, en cas de baisse de la pression du fluide apporté via le branchement (61) de fluide sous pression, prend en charge l'actionnement du levier de frein (30) pour le freinage.

12. Essieu moteur selon la revendication 10 ou 11, **caractérisé en ce que** la tige de piston (41) peut, au moyen d'un actionneur (47, 48), être réglée axialement par rapport à la partie de piston (44 ; 59) de l'entraînement (40 ; 55) par fluide sous pression.

13. Essieu moteur selon l'une quelconque des revendications 10 à 12, **caractérisé en ce que** l'entraînement (40 ; 55) par fluide sous pression est fixé de manière amovible sur la partie d'appendice (38) du compartiment (36) de boîtier de frein, et une ouverture de passage (51) pour la tige de piston (41) est prévue dans le prolongement axial de cette dernière dans la partie d'appendice (38) du compartiment (36) de boîtier de frein.

14. Essieu moteur selon l'une quelconque des revendications 10 à 13, **caractérisé en ce que**, afin d'utiliser le frein (20) à disques multiples comme frein de stationnement, la tige de piston (41) de l'entraînement (40) par fluide sous pression peut être déplacée dans la direction de freinage par actionnement direct au moyen d'un dispositif d'actionnement.

15. Essieu moteur selon l'une quelconque des revendications 9 à 14, **caractérisé en ce que**, afin de libérer le frein à disques multiples pour des processus de remorquage ou processus de déplacement analogues, il est prévu un dispositif d'actionnement qui agit dans la direction de libération sur la tige de piston de l'entraînement par fluide sous pression ou, lorsque des freins à disques multiples sont prévus sur les deux côtés de l'essieu moteur avec des tiges de piston opposées alignées axialement, sur les deux tiges de piston des deux entraînements par fluide sous pression.

16. Essieu moteur selon l'une quelconque des revendications 1 à 15, **caractérisé en ce que** le groupe de disques du frein (20) à disques multiples est disposé sur un arbre d'entraînement (15) en tant qu'élément intermédiaire, qui est décalé radialement par rapport à l'arbre de sortie associé (10) du différentiel (8) et qui se trouve en liaison d'entraînement avec ce dernier par l'intermédiaire d'un engrenage droit (16, 17).
